# FASCICULE DE BREVET EUROPEEN

(11) **EP 0 825 076 B1**
(45) Date de publication et mention de la délivrance du brevet: **23.01.2002**
(21) Numéro de dépôt: 97401614.9
(22) Date de dépôt: 07.07.1997
(51) Int. Cl.: B60S 1/08

(54) **Vitrage feuilleté équipé d'un détecteur**
Verbundglasscheibe mit Detektor
Laminated glazing equipment with a detector

(30) Priorité: 24.07.1996 FR 9609280
(43) Date de publication de la demande: 25.02.1998
(73) Titulaire: SAINT-GOBAIN GLASS FRANCE, 92400 Courbevoie (FR)
(72) Inventeur: Didelot, Claude, 60150 Thourotte (FR); Mathivat, Denis, 60150 Thourotte (FR); de Paoli, Martial, 60400 Cuts (FR); Lamico, Anne, 60280 Margny Les Compiegne (FR)
(74) Mandataire: Breton, Jean-Claude

(56) Documents cités:
- EP-A- 0 177 419
- EP-A- 0 512 653
- EP-A- 0 641 696

## Description

La présente invention concerne un vitrage, notamment pour véhicule de transport terrestre, maritime ou aérien, équipé d'un système de détection monté sur le vitrage lui-même, notamment un système de détection de corps étrangers tels que de l'eau à la surface extérieure du vitrage. Plus particulièrement, l'invention concerne un vitrage feuilleté pourvu d'un système de détection susceptible de fournir un signal capable de commander le fonctionnement d'un dispositif tel qu'un dispositif d'essuie-glace. L'invention concerne encore un vitrage feuilleté prêt à être équipé notamment par un tel système de détection.

Des vitrages équipés de systèmes de détection d'eau ou d'humidité ont déjà été décrits par exemple dans les publications de brevets WO-A-94/00319, EP-A-0 512 653, EP-A-0 626 593. Ces systèmes de détection comprennent un transducteur pour émettre au moins un signal ultrasonore se propageant dans l'épaisseur du vitrage et pour recevoir un signal réfléchi représentatif de la présence ou non de corps étrangers, le transducteur étant fixé sur la face intérieure du vitrage, c'est-à-dire sur la face du vitrage orientée vers l'habitacle du véhicule. Le signal réfléchi reçu par le transducteur est transformé en signal électrique et comparé à un seuil de référence. Le résultat de la comparaison entraîne ou non la commande du fonctionnement du moteur d'essuie-glace.

Pour assurer la fiabilité du système de détection, il est nécessaire que le signal réfléchi ne subisse pas de perturbations non contrôlables.

Or, en disposant le système de détection sur un vitrage feuilleté, de façon connue, c'est-à-dire sur la face du vitrage orientée vers l'habitacle du véhicule comme décrit dans les documents cités précédemment, la couche intercalaire en matière plastique, généralement en polyvinylbutyral plastifié (PVB), qui est nécessairement traversée par le signal incident et par le signal réfléchi, est une source de perturbation importante pour ce signal. En particulier les variations des propriétés du PVB en fonction de la température, liées à l'épaisseur conséquente de la couche (usuellement de l'ordre de 0,76 mm) provoquent notamment des variations dans l'amortissement du signal réfléchi, qui ne peuvent être analysés et traitées en conséquence par une dispositif électronique simple, c'est-à-dire par un dispositif qui ne soit pas d'un coût exorbitant pour l'application envisagée.

Ce problème a été résolu en supprimant une rondelle de la couche de matière plastique en regard du détecteur, entre celui-ci et la face extérieure du vitrage. Notamment, la publication de brevet EP-A-0 641 696 décrit le collage direct du détecteur sur la feuille intérieure de la feuille de verre extérieure. Dans une première variante, un alésage est pratiqué dans la couche intercalaire de matière plastique et dans la feuille de verre intérieure, l'ouverture ainsi constituée étant fermée par un bouchon. Selon une seconde variante, un alésage n'est pratiqué que dans la couche intercalaire, l'espace ainsi constitué pour le détecteur étant simplement fermé par la feuille de verre intérieure.

Dans tous les cas, seul le montage à demeure du détecteur sur le vitrage a été envisagé ce qui, à l'évidence, constitue un inconvénient, notamment lorsque le détecteur devient défectueux ou cesse de fonctionner, alors que le vitrage demeure en parfait état ou, à l'inverse, lorsque le vitrage se brise et que l'on souhaite récupérer le détecteur en bon état, dans des conditions satisfaisantes sans le détériorer. En effet, le prix de revient du détecteur n'est en général pas négligeable par rapport à celui du vitrage, mais peut au contraire être sensiblement du même ordre de grandeur.

D'autre part, la publication de brevet WO-A-95/25651 décrit un détecteur fixé de manière amovible sur la face interne d'un vitrage. Il s'agit cependant d'un détecteur de type optique, dont la complexité et surtout l'encombrement sont incomparablement supérieurs à ceux des détecteurs conformes à l'invention.

Le besoin se faisait donc sentir de pouvoir disposer de vitrages équipés de détecteurs fiables, de faibles poids et encombrement, montés de façon amovibles.

En conséquence, un premier objet de l'invention consiste en un vitrage feuilleté notamment pour véhicule de transport, comprenant une feuille rigide de verre extérieure, au moins une couche de matière plastique, une feuille de verre intérieure et un détecteur monté sur le vitrage pour détecter à l'aide d'un signal la présence d'objets ou de corps étrangers à l'extérieur du vitrage, le détecteur prenant place dans un espace formé au sein des couche et feuille de vitrage autre que ladite feuille de verre extérieure (Vitrage du type divulgué, par exemple, dans EP-A-0 641 696), caractérisé en ce que ledit espace est fermé de manière amovible au moyen d'un capot ou d'un couvercle qui, en position de fermeture, exerce une force sur le détecteur, de manière à le plaquer et le maintenir en contact étroit et permanent avec la face intérieure de la feuille de verre extérieure.

Selon des modes de réalisation de l'invention:
- le vitrage comprend, de l'extérieur vers l'intérieur, une première feuille de verre, une couche de matière plastique et une deuxième feuille de verre,
- le détecteur est un transducteur ultrasonore mettant en oeuvre un liquide de couplage interposé de manière étanche entre la face du transducteur qui assume la fonction de détection et la face intérieure de la feuille de verre extérieure,
- le liquide de couplage est disposé au préalable sur la face du transducteur qui assume la fonction de détection, et protégé par un opercule étanche destiné à être arraché avant l'installation du détecteur sur le vitrage, et
- le capot et/ou couvercle exerce la force désirée sur le détecteur par l'intermédiaire d'un système élastique tel un ressort.

Un second objet de l'invention consiste dans le procédé pour la fabrication du vitrage feuilleté.

Divers modes de réalisation de l'invention sont précisés dans les revendications 2 à 16 et dans les revendications 18 et 19 en tant que revendications dépendantes.

D'autres caractéristiques et avantages de l'invention apparaîtront dans la description qui va suivre des dessins en annexe dans lesquels :

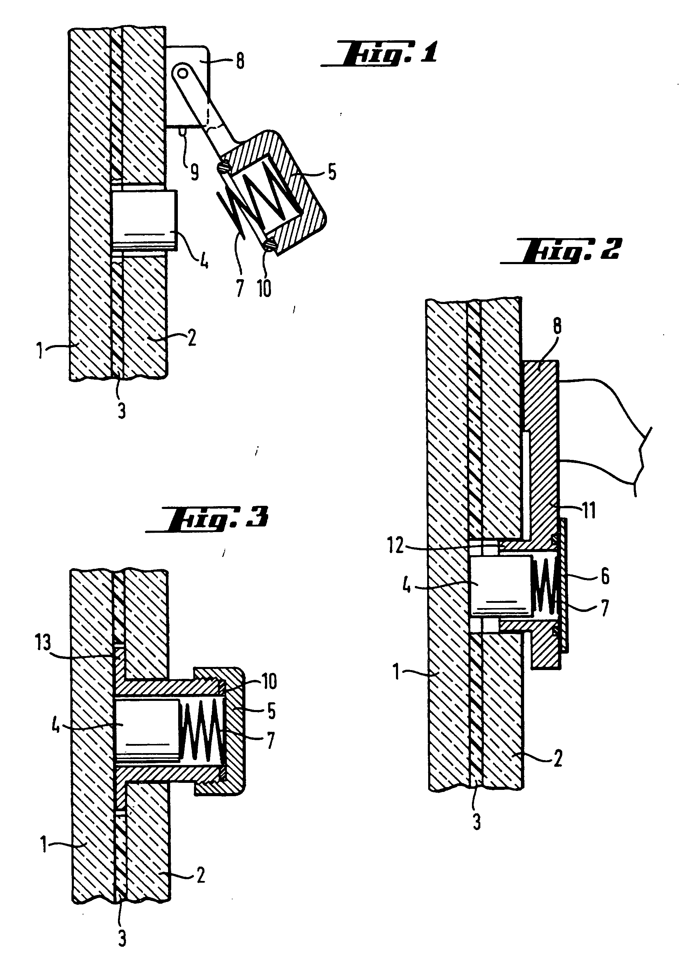

- les figures 1, 2 et 3 sont, respectivement, des représentations schématiques en coupe et en vue de profil de trois modes de réalisation différents de la présente invention.

En référence à la figure 1, un vitrage est constitué d'une feuille de verre extérieure 1, d'une feuille de verre intérieure 2 et d'une couche intercalaire 3 de polyvinylbutyral, désigné ci-après par PVB.

La feuille 2 et la couche 3 présentent chacune un alésage sur toute leur épaisseur, en regard l'un par rapport à l'autre. Dans l'espace ainsi formé, on a introduit un transducteur ultrasonore 4 de sorte que sa face émettrice et réceptrice vienne en contact avec la face intérieure de la feuille extérieure 1. Un capot 5 vient exercer, par l'intermédiaire d'un ressort 7 disposé dans l'espace intérieur du capot 5 et en position de fermeture, une force sur le transducteur 4, de manière à le plaquer et le maintenir en contact étroit et permanent avec la face intérieure de la feuille 1 en vue de fiabiliser le fonctionnement. Cette force peut être de l'ordre de 1 à 5 daN.

Un joint étanche 10 monté à la périphérie du capot 5 assure la fermeture étanche de l'espace pour le transducteur 4.

Le capot 5 est formé à l'extrémité et dans la continuité d'une pièce en forme de bras articulé sur une embase 8, par exemple une embase de rétroviseur intérieur de véhicule automobile. Cette embase 8 peut être collée sur la face intérieure du vitrage ou encore être fixée sur un élément de carrosserie, de préférence le cadre du vitrage.

Un moyen de blocage 9 du capot 5 dans sa position fermée est disposé sur l'embase 8 et peut consister en un moyen d'encliquetage.

Selon le mode de réalisation représenté sur la figure 2, l'embase 8 d'un rétroviseur, non représenté, comporte un prolongement 11 avec lequel elle forme un ensemble en liaison fixe avec le vitrage. Le prolongement 11 est traversé, dans toute son épaisseur, par un alésage formé notamment, à son extrémité dirigée vers l'extérieur du vitrage, dans un élément de guidage 12 en saillie épousant la forme dudit espace pour le détecteur 4. L'autre extrémité de l'alésage est susceptible d'être obturée de manière étanche par le couvercle 6. Bien que l'ensemble constitué par l'embase 8 et son prolongement 11 soit ici représenté collé sur la face intérieure du vitrage uniquement dans la région de l'embase 8 elle-même, il est également possible de n'effectuer ce collage que dans la région du prolongement 11, autour de l'ouverture présentée par ledit espace pour le détecteur 4.

Selon un mode de réalisation particulièrement avantageux de l'invention, les formes respectives et correspondantes de l'espace pour le détecteur 4 et de l'élément de guidage 12 en saillie n'en permettent l'emboîtement que dans un unique positionnement relatif. Par exemple, une telle forme ne comportant aucun axe de symétrie, ou au plus un, pourrait convenir à cet effet. Ceci permet d'obtenir aisément le positionnement désiré du rétroviseur.

D'autre part, selon les deux variantes décrites ci-dessus, le capot 5 ou le couvercle 6 est déporté, par rapport à l'embase 8, d'une distance suffisante pour en permettre une ouverture et une fermeture aisées, sans la gêne que pourrait occasionner un encombrement trop important de la zone de manipulation. Ceci permet d'autre part de surmonter le problème des perturbations du fonctionnement du transducteur ultrasonore dues aux vibrations du rétroviseur.

En référence à la figure 3, le détecteur 4 ne prend pas directement place dans l'espace fermé par les alésages dans la couche intercalaire 3 de PVB et dans la feuille de verre 2 intérieure, mais par l'intermédiaire d'une pièce support 13. La partie de la pièce 13 reçue au sein de la couche 3 de PVB a une section plus importante que celle de la partie située au niveau de l'épaisseur de la feuille de verre 2. Cette caractéristique garantit, dans l'état final du vitrage, l'ancrage de la pièce support 13 dans la structure composite, cet ancrage étant finalement complété par le fluage du PVB lors de l'opération d'autoclavage.

Le même résultat pourrait d'ailleurs être obtenu en équipant la périphérie de la pièce 13 d'ergots qui viendraient s'encliqueter sur la face extérieure de la feuille de verre intérieure 2. A supposer que, de plus, comme indiqué ci-dessus, la section, ou les deux sections mentionnées précédemment, de la pièce 13 comportent, par exemple, au plus un axe de symétrie, la pièce 13 est avantageusement utilisée pour l'obtention aisée du positionnement désiré des feuilles 1 et 2 et de la couche 3 les unes par rapport aux autres lors de la fabrication du vitrage, en particulier lors de l'empilage des éléments constitutifs.

La pièce 13 présente une excroissance par rapport à la face intérieure du vitrage, sur laquelle un capot 5 peut être fixé par vissage ou encliquetage, un ressort 7 et un joint d'étanchéité 10 étant par ailleurs mis en oeuvre comme décrit précédemment.

Bien entendu, le détecteur 4 est relié à une alimentation électrique, d'une manière que l'homme du métier saura adapter en fonction des différentes configurations.

L'invention a par ailleurs pour objet un procédé pour la fabrication d'un vitrage comportant une feuille de verre extérieure, une couche intercalaire de PVB et une feuille de verre intérieure, ce procédé comprenant les étapes consistant à :
a) percer la feuille de verre destinée à constituer la feuille de verre intérieure, à l'emplacement prévu pour le montage ultérieur du détecteur,
b) associer cette feuille intérieure à une seconde feuille de verre destinée à constituer la feuille de verre extérieure,
c) soumettre l'ensemble à un procédé de bombage,
d) retirer de la feuille de PVB une rondelle à l'emplacement prévu pour le montage ultérieur du détecteur,
e) assembler les deux feuilles de verre après interposition de la feuille de PVB et, le cas échéant, d'une pièce support,
f) mettre en place le détecteur, le maintenir en contact étroit avec la face intérieure de la feuille de verre extérieure, après interposition éventuelle d'un liquide de couplage, et
g) mettre en place le capot et/ou couvercle étanche et amovible, étant entendu qu'en l'absence d'interposition d'une pièce support dans l'étape e), cette dernière peut être effectuée avant l'étape d).

Conformément à ce procédé, l'assemblage lui-même est effectué de préférence en insérant successivement un élément de guidage ou une pièce support dans l'alésage pratiqué dans la feuille de verre intérieure, puis dans celui pratiqué dans la feuille de PVB. Ceci permet d'obtenir un centrage parfait des éléments de l'empilage.

D'autre part, l'invention a également pour objet un vitrage feuilleté bombé comprenant une feuille extérieure, une feuille intérieure et au moins une couche intercalaire, caractérisé en ce que la feuille de verre intérieure est pourvue d'au moins un trou réalisé avant le traitement thermique de bombage des feuilles de verre de manière à permettre le montage d'un détecteur tel que décrit précédemment.

Afin de renforcer les caractéristiques mécaniques du vitrage, le pourtour du trou de la feuille de verre intérieure est avantageusement soumis à des contraintes en compression. Ces contraintes qui peuvent s'étendre sur quelques millimètres par exemple peuvent être obtenues par une opération de trempe thermique localisée autour du trou. Les contraintes peuvent être de l'ordre de 5 à 40 mégapascals. Pour ce faire, on souffle un air comprimé autour du trou de la feuille intérieure disposée normalement au-dessus de l'empilage constitué par les deux feuilles de verre, au cours du refroidissement consécutif au traitement de bombage, notamment sur cadre, par gravité.

Pour maquiller ou masquer le détecteur à la vue de l'extérieur du pare-brise, on peut avantageusement prévoir le dépôt d'une couche opaque telle une couche d'émail en face intérieure de la feuille de verre 1 extérieure au moment de la fabrication du vitrage. Ce dépôt peut s'opérer de manière connue par dépôt d'une composition d'émail, notamment par sérigraphie, suivi d'une cuisson simultanée à l'opération de bombage.

Ce dépôt peut être prévu dans la continuité du cadre émaillé qui est généralement prévu pour les vitrages destinés à être collés si celui-ci s'opère sur la face intérieure de la feuille de verre 1 extérieure.

Il permet encore de masquer des défauts éventuels de collage du PVB à proximité du trou du vitrage. La couche d'émail peut ainsi être remplacée par une autre couche opaque (primaire noir, etc...).

Un dernier objet de l'invention consiste en un détecteur utilisable pour la fabrication d'un vitrage tel que décrit précédemment, caractérisé en ce qu'il comprend, sur l'une de ses faces, un liquide de couplage préalablement disposé et protégé par un opercule étanche destiné à être arraché avant l'installation du détecteur sur le vitrage.

## Revendications

1. Vitrage feuilleté notamment pour véhicule de transport, comprenant une feuille rigide de verre extérieure (1), au moins une couche de matière plastique (3), une feuille de verre intérieure (2) et un détecteur (4) monté sur le vitrage pour détecter à l'aide d'un signal la présence d'objets ou de corps étrangers à l'extérieur du vitrage, le détecteur (4) prenant place dans un espace formé au sein des couche (3) et feuille (2) du vitrage autres que ladite feuille de verre (1) extérieure, **caractérisé en ce que** ledit espace est fermé de manière amovible au moyen d'un capot (5) ou couvercle (6) qui, en position de fermeture, exerce une force sur le détecteur (4), de manière à le plaquer et le maintenir en contact étroit et permanent avec la face intérieure de la feuille de verre extérieure (1).

2. Vitrage selon la revendication 1, **caractérisé en ce qu'**il comprend, de l'extérieur vers l'intérieur, une première feuille de verre (1), une couche intercalaire de matière plastique (3) et une seconde feuille de verre (2).

3. Vitrage selon la revendication 1 ou 2, **caractérisé en ce que** le détecteur (4) est un transducteur ultrasonore mettant en oeuvre un liquide de couplage interposé de manière étanche entre la face du transducteur qui assume la fonction de détection et la face intérieure de la feuille de verre (1) extérieure.

4. Vitrage selon la revendication 3, **caractérisé en ce que** le liquide de couplage est disposé au préalable sur la face du transducteur qui assume la fonction de détection, et protégé par un opercule étanche destiné à être arraché avant l'installation du détecteur sur le vitrage.

5. Vitrage selon l'une des revendications 1 à 4, **caractérisé en ce que** le capot (5) ou couvercle (6) exerce la force désirée sur le détecteur (4) par l'intermédiaire d'un système élastique tel un ressort (7).

6. Vitrage selon l'une quelconque des revendications 1 à 5, **caractérisé en ce que** ledit capot (5) est articulé sur l'embase (8) d'un rétroviseur intérieur.

7. Vitrage selon la revendication 6, **caractérisé en ce que** l'embase (8) est fixée sur la face intérieure du vitrage ou sur un élément de carrosserie par tout moyen approprié et comporte un moyen de blocage (9) du capot (5) dans sa position de fermeture dudit espace destiné à la mise en place du détecteur (4), le capot (5) étant muni à sa périphérie, en regard de celle dudit espace, d'un joint d'étanchéité (10).

8. Vitrage selon l'une quelconque des revendications 1 à 5, **caractérisé en ce que** ledit couvercle (6) est susceptible de fermer ledit espace destiné à la mise en place du détecteur (4) par obturation d'un alésage traversant formé dans le prolongement (11) de l'embase (8) d'un rétroviseur intérieur, cette embase (8) étant fixée sur la face intérieure du vitrage par tout moyen approprié, et **en ce que** ledit alésage traversant est formé, à son extrémité opposée à celle destinée à recevoir le couvercle (6), dans un élément de guidage (12) en saillie épousant la forme dudit espace pour le détecteur (4).

9. Vitrage selon la revendication 8, **caractérisé en ce que** l'embase (8) du rétroviseur et son prolongement (11) sont fixés par collage, uniquement dans la région de l'embase (8) elle-même, sur la face intérieure du vitrage.

10. Vitrage selon la revendication 8, **caractérisé en ce que** l'embase (8) du rétroviseur et son prolongement (11) sont fixés par collage, uniquement dans la région dudit prolongement (11), autour de l'ouverture que présente ledit espace pour le détecteur (4), sur la face intérieure du vitrage.

11. Vitrage selon l'une quelconque des revendications 8 à 10, **caractérisé en ce que** ledit espace destiné à la mise en place du détecteur (4) est d'une forme telle qu'il ne puisse recevoir ledit élément de guidage (12) en saillie que dans une unique position de celui-ci, de sorte que le positionnement désiré du rétroviseur soit aisément obtenu.

12. Vitrage selon l'une quelconque des revendications 6 à 11, **caractérisé en ce que** le capot (5) ou le couvercle (6) est déporté, par rapport à l'embase (8) du rétroviseur, d'une distance suffisante pour en permettre une ouverture et une fermeture aisées et éviter que les vibrations du rétroviseur ne perturbent le détecteur (4) en fonctionnement.

13. Vitrage selon l'une quelconque des revendications 2 à 5 et 8 à 12, **caractérisé en ce que** le détecteur (4) ne prend pas directement place dans l'espace formé au sein de la couche de matière plastique (3) et de la seconde feuille de verre (2), mais dans une pièce support (13) dont la forme, correspondant à celle des alésages pratiqués dans la couche de matière plastique (3) et dans la seconde feuille de verre (2), permet d'obtenir aisément le positionnement désiré de la pièce support (13), des deux feuilles de verre (1, 2) et de la couche (3) constitutives du vitrage les unes par rapport aux autres et contribue, dans l'état final du vitrage, à maintenir la pièce support (13) immobile dans son positionnement désiré.

14. Vitrage feuilleté bombé selon l'une des revendications précédentes comprenant une feuille de verre extérieure, une feuille de verre intérieure et au moins une couche intercalaire, **caractérisé en ce que** la feuille de verre intérieure est pourvue d'au moins un trou réalisé avant le traitement thermique de bombage des feuilles de verre de manière à permettre le montage de son détecteur.

15. Vitrage feuilleté bombé selon la revendication 14, **caractérisé en ce que le** pourtour du trou présente des contraintes en compression.

16. Vitrage feuilleté bombé selon la revendication 14 ou 15, **caractérisé en ce qu**'une couche opaque, telle une couche d'émail ou de primaire noir, est déposée sur une partie de la face intérieure de la feuille de verre (1) extérieure, suffisante pour masquer le détecteur à la vue de l'extérieur du vitrage.

17. Procédé pour la fabrication du vitrage selon la revendication 2, **caractérisé en ce qu'**il comprend les étapes consistant à :
a) percer la feuille de verre destinée à constituer la feuille de verre intérieure, à l'emplacement prévu pour le montage ultérieur du détecteur,
b) associer cette feuille intérieure à une seconde feuille de verre destinée à constituer la feuille de verre extérieure,
c) soumettre l'ensemble à un procédé de bombage,
d) retirer de la couche de matière plastique une rondelle à l'emplacement prévu pour le montage ultérieur du détecteur,
e) assembler les deux feuilles de verre après interposition de la couche de matière plastique et, le cas échéant, d'une pièce support,
f) mettre en place le détecteur, le maintenir en contact étroit avec la face intérieure de la feuille de verre extérieure, après interposition éventuelle d'un liquide de couplage, et
g) mettre en place le capot et/ou couvercle étanche et amovible, étant entendu qu'en l'absence d'interposition d'une pièce support dans l'étape e), cette dernière peut être effectuée avant l'étape d).

18. Procédé selon la revendication 17, **caractérisé en ce qu**'il comprend les étapes consistant successivement à :
• insérer un élément de guidage ou une pièce support dans l'alésage pratiqué dans la feuille de verre intérieure,
• puis dans celui pratiqué dans la couche de matière plastique ce qui permet d'obtenir un centrage parfait des éléments de l'empilage.

19. Détecteur susceptible d'être utilisé pour la fabrication d'un vitrage selon l'une quelconque des revendications 1 à 13, **caractérisé en ce qu'il** comprend, sur l'une de ses faces, un liquide de couplage préalablement disposé et protégé par un opercule étanche destiné à être arraché avant l'installation du détecteur sur le vitrage.

## Claims

1. Laminated glazing, particularly for a transportation vehicle, comprising an external, rigid glass sheet (1), at least one plastics material coating (3), an inner glass sheet (2) and a detector (4) mounted on the glazing for detecting, with the aid of a signal, the presence of objects or foreign bodies outside the glazing, the detector being placed in a space formed within the coating (3) and the glazing sheet (2) other than the outer glass sheet (1), **characterized in that** the space is removably closed by means of a hood (5) or cover (6) which, in the closed position, exerts a force on the detector (4), so as to engage it and maintain it in close, permanent contact with the inner face of the outer glass sheet (1).

2. Glazing according to claim 1, **characterized in that** it comprises, from the outside to the inside, a first glass sheet (1), a plastics material, spacing coating (3) and a second glass sheet (2).

3. Glazing according to claim 1 or 2, **characterized in that** the detector (4) is an ultrasonic transducer using a coupling liquid tightly interposed between the transducer face assuming the detection function and the inner face of the outer glass sheet (1).

4. Glazing according to claim 3, **characterized in that** the coupling liquid is placed beforehand on the transducer face assuming the detection function and is protected by a tight cap which is to be pulled off prior to the installation of the detector on the glazing.

5. Glazing according to one of the claims 1 to 4, **characterized in that** the hood (5) or cover (6) exerts the desired force on the detector (4) by means of an elastic system such as a spring (7).

6. Glazing according to any one of the claims 1 to 5, **characterized in that** said hood (5) is articulated on the base (8) of an internal rear-view mirror.

7. Glazing according to claim 6, **characterized in that** the base (8) is fixed to the inner face of the glazing or to a body element by any appropriate means and has a means (9) for locking the hood (5) in its position closing said space for putting the detector (4) into position, the hood (5) being provided on its periphery, facing said space, with a seal (10).

8. Glazing according to any one of the claims 1 to 5, **characterized in that** said cover (6) is able to close the space for the putting into position of the detector (4) by sealing a through bore formed in the extension (11) of the base (8) of an internal rear-view mirror, said base (8) being fixed to the inner face of the glazing by any appropriate means, and **in that** the through bore is formed, at its end opposite to that intended to receive the cover (6), in a projecting guide element (12) adopting the shape of said space for the detector (4).

9. Glazing according to claim 8, **characterized in that** the base (8) of the rear-view mirror and its extension (11) are fixed by bonding, solely in the region of the base (8), to the inner face of the glazing.

10. Glazing according to claim 8, **characterized in that** the base (8) of the rear-view mirror and its extension (11) are fixed by bonding, solely in the region of said extension (11), around the opening of said space for the detector (4), on the inner face of the glazing.

11. Glazing according to any one of the claims 8 to 10, **characterized in that** the space intended for the positioning of the detector (4) has a shape such that it can only receive the projecting guide element (12) in a single position thereof, so that the desired positioning of the rear-view mirror is easily obtained.

12. Glazing according to any one of the claims 6 to 11, **characterized in that** the hood (5) or cover (6) is offset, with respect to the rear-view mirror base (8), by an adequate distance in order to permit an easy opening and closing thereof and ensuring that rear-view mirror vibrations do not disturb the operation of the detector (4).

13. Glazing according to any one of the claims 1 to 5 and 8 to 12, **characterized in that** the detector (4) does not directly take up its position in the space formed within the plastics material coating (3) and the second glass sheet (2), but instead in a support part (13), whose shape, corresponding to that of bores made in the plastics material coating (3) and in the second glass sheet (2), easily makes it possible to obtain the desired positioning of the support part (13), the two glass sheets (1, 2) and the coating (3) constituting the glazing with respect to one another and contributes, in the final state of the glazing, to keeping the support part (13) stationary in its desired position.

14. Bent, laminated glazing according to any one of the preceding claims comprising an outer glass sheet, an inner glass sheet and at least one spacing coating, **characterized in that** the inner glass sheet is provided with at least one hole made prior to the bending heat treatment of the glass sheets so as to permit the installation of its detector.

15. Bent, laminated glazing according to claim 14, **characterized in that** the periphery of the hole has compression stresses.

16. Bent, laminated glazing according to claim 14 or 15, **characterized in that** an opaque coating, such as an enamel or black primer coating, is deposited on part of the inner face of the outer glass sheet (1), which is adequate for masking the detector from observation from outside the glazing.

17. Process for the production of the glazing according to claim 2, **characterized in that** it comprises stages consisting of:
a) piercing the glass sheet intended to form the inner glass sheet, at the location provided for the subsequent installation of the detector,
b) associating said inner sheet with a second glass sheet intended to constitute the outer glass sheet,
c) subjecting the assembly to a bending process,
d) removing from the plastics material coating a washer at the location intended for the subsequent installation of the detector,
e) assembling the two glass sheets following the interposing of the plastics material coating and, if appropriate, a support part,
f) putting into place the detector, maintaining it in close contact with the inner face of the outer glass sheet, following the possible interposing of a coupling liquid and
g) putting into place the tight, removable hood and/or cover, it being understood that in the absence of the interposing of a support part in stage e), the latter can be carried out before stage d).

18. Process according to claim 17, **characterized in that** it comprises stages successively consisting of:
- inserting a guide element or a support part in the bore made in the inner glass sheet,
- then in the bore made in the plastics material coating, which makes it possible to obtain a perfect centring of the elements of the stack.

19. Detector usable for the production of a glazing according to any one of the claims 1 to 13, **characterized in that** it comprises, on one of its faces, a previously deposited coupling liquid protected by a tight cap which is to be pulled off prior to the installation on the glazing of said detector.

## Patentansprüche

1. Verbundglasscheibe, insbesondere für Transportfahrzeuge, die eine starre äußere Glasscheibe (1), mindestens eine Kunststoffschicht (3), eine innere Glasscheibe (2) und einen Detektor (4) umfasst, der in der Verbundglasscheibe angebracht ist, um das Vorhandensein von Objekten oder Fremdkörpern außen auf der Verbundglasscheibe mittels eines Signals festzustellen, und welcher sich in einem Loch befindet, das in der Schicht (3) und der Glasscheibe (2) der Verbundglasscheibe ausgebildet worden ist, die nicht die äußere Glasscheibe (1) ist, **dadurch gekennzeichnet, dass** das Loch mit einer abnehmbaren Kappe (5) oder einem abnehmbaren Deckel (6) verschlossen ist, die/der in Verschlussposition derart eine Kraft auf den Detektor (4) ausübt, dass dieser an die Innenseite der äußeren Glasscheibe (1) gedrückt und in engem und ständigem Kontakt mit ihr gehalten wird.

2. Verbundglasscheibe nach Anspruch 1, **dadurch gekennzeichnet, dass** sie von außen nach innen eine erste Glasscheibe (1), eine Zwischenschicht (3) aus Kunststoff und eine zweite Glasscheibe (2) umfasst.

3. Verbundglasscheibe nach Anspruch 1 oder 2, **dadurch gekennzeichnet, dass** der Detektor (4) ein Ultraschallkopf ist, bei welchem eine Kopplungsflüssigkeit eingesetzt wird, die zwischen der Seite des Ultraschallkopfs, welche die Detektionsfunktion ausübt, und der Innenseite der äußeren Glasscheibe (1) dicht angeordnet ist.

4. Verbundglasscheibe nach Anspruch 3, **dadurch gekennzeichnet, dass** die Kopplungsflüssigkeit vorher auf der Seite des Ultraschallkopfs, welche die Detektionsfunktion ausübt, angeordnet und durch eine dichte Abdeckung geschützt ist, die vorgesehen ist, vor dem Anbringen des Detektors in der Verbundglasscheibe abgezogen zu werden.

5. Verbundglasscheibe nach einem der Ansprüche 1 bis 4, **dadurch gekennzeichnet, dass** die Kappe (5) oder der Dekkel (6) die gewünschte Kraft über ein elastisches System wie eine Feder (7) auf den Detektor (4) ausübt.

6. Verbundglasscheibe nach einem der Ansprüche 1 bis 5, **dadurch gekennzeichnet, dass** die Kappe (5) am Fuß (8) eines Innenrückspiegels gelenkig befestigt ist.

7. Verbundglasscheibe nach Anspruch 6, **dadurch gekennzeichnet, dass** der Fuß (8) durch ein beliebiges geeignetes Mittel auf der Innenseite der Verbundglasscheibe oder an einem Karosserieteil befestigt ist und ein Mittel (9) zum Arretieren der Kappe (5) in der Position umfasst, in welcher sie das für die Anbringung des Detektors (4) vorgesehene Loch verschließt, wobei die Kappe (5) an ihrem dem des Lochs gegenüber liegenden Umfang mit einer Dichtung (10) versehen ist.

8. Verbundglasscheibe nach einem der Ansprüche 1 bis 5, **dadurch gekennzeichnet, dass** der Deckel (6) das für die Anbringung des Detektors (4) vorgesehene Loch durch Verschließen einer Durchgangsbohrung verschließen kann, die in der Verlängerung (11) des Fußes (8) eines Innenruckspiegels ausgebildet ist, wobei der Fuß (8) durch ein beliebiges geeignetes Mittel auf der Innenseite der Verbundglasscheibe befestigt ist, **und dass** die Durchgangsbohrung an dem Ende, das demjenigen gegenüber liegt, das vorgesehen ist, den Deckel (6) aufzunehmen, in einem vorstehenden Führungselement (12), das auf der Form des Lochs für den Detektor (4) aufliegt, ausgebildet ist.

9. Verbundglasscheibe nach Anspruch 8, **dadurch gekennzeichnet, dass** der Fuß (8) des Rückspiegels und seine Verlängerung (11) ausschließlich im Bereich des Fußes (8) selbst durch Aufkleben an der Innenseite der Verbundglasscheibe befestigt sind.

10. Verbundglasscheibe nach Anspruch 8, **dadurch gekennzeichnet, dass** der Fuß (8) des Rückspiegels und seine Verlängerung (11) ausschließlich im Bereich der Verlängerung (11) um die Öffnung, die das Loch für den Detektor (4) darstellt, durch Aufkleben an der Innenseite der Verbundglasscheibe befestigt sind.

11. Verbundglasscheibe nach einem der Ansprüche 8 bis 10, **dadurch gekennzeichnet, dass** die Form des für die Anbringung des Detektors (4) vorgesehenen Lochs derart ist, dass es das vorstehende Führungselement (12) nur in einer einzigen Position von diesem so aufnehmen kann, dass die gewünschte Positionierung des Rückspiegels leicht erhalten wird.

12. Verbundglasscheibe nach einem der Ansprüche 6 bis 11, **dadurch gekennzeichnet, dass** die Kappe (5) oder der Dekkel (6) in Bezug auf den Fuß (8) des Rückspiegels um eine Entfernung versetzt angeordnet ist, die ausreicht, um ihr/sein leichtes Öffnen und Schließen zu ermöglichen und um zu verhindern, dass Schwingungen des Rückspiegels den Betrieb des Detektors (4) stören.

13. Verbundglasscheibe nach einem der Ansprüche 2 bis 5 und 8 bis 12, **dadurch gekennzeichnet, dass** der Detektor (4) nicht direkt in dem in der Kunststoffschicht (3) und der zweiten Glasscheibe (2) ausgebildeten Loch, sondern in einem Halteteil (13) angeordnet ist, dessen Form, die der der in der Kunststoffschicht (3) und der zweiten Glasscheibe (2) angebrachten Bohrungen entspricht, es erlaubt, die gewünschte Positionierung des Halteteils (13), der beiden Glasscheiben (1, 2) und der Kunststoffschicht (3), welche die Verbundglasscheibe bilden, zueinander leicht zu erhalten, und im fertigen Zustand der Verbundglasscheibe dazu beiträgt, das Halteteil (13) in der gewünschten Position unbeweglich zu halten.

14. Gebogene Verbundglasscheibe nach einem der vorhergehenden Ansprüche, welche eine äußere Glasscheibe, eine innere Glasscheibe und mindestens eine Zwischenschicht umfasst, **dadurch gekennzeichnet, dass** die innere Glasscheibe mit mindestens einem Loch versehen ist, das vor der Wärmebehandlung zum Biegen der Glasscheiben derart hergestellt wird, dass es die Anbringung des Detektors ermöglicht.

15. Gebogene Verbundglasscheibe nach Anspruch 14, **dadurch gekennzeichnet, dass** der Umfang des Lochs Druckspannungen aufweist.

16. Gebogene Verbundglasscheibe nach Anspruch 14 oder 15, **dadurch gekennzeichnet, dass** auf der Innenseite der äußeren Glasscheibe (1) eine undurchsichtige Schicht wie eine Schicht aus einem Email oder einer schwarzen Grundierung aufgebracht ist, die ausreicht, dass der Detektor von außen nicht zu sehen ist.

17. Verfahren zur Herstellung der Verbundglasscheibe nach Anspruch 2, **dadurch gekennzeichnet, dass** es die Stufen umfasst, die darin bestehen:
a) die zur Bildung der inneren Glasscheibe bestimmte Glasscheibe an der für die spätere Anbringung des Detektors vorgesehenen Stelle zu durchbohren,
b) die innere Glasscheibe mit einer zur Bildung der äußeren Glasscheibe bestimmten zweiten Glasscheibe zusammenzulegen,
c) das Ganze einem Biegevorgang zu unterziehen,
d) aus der Kunststoffachicht an der für die spätere Anbringung des Detektors vorgesehenen Stelle eine Scheibe herauszuschneiden,
e) die beiden Glasscheiben nach Einlegen der Kunststoffschicht und gegebenenfalls eines Halteteils zu assemblieren,
f) Anbringen des Detektors, gegebenenfalls nachdem eine Kopplungsflüssigkeit dazwischengelegt worden ist, wobei er in engem Kontakt mit der Innenseite der äußeren Glasscheibe gehalten wird, und
g) Anbringen der abnehmbaren dichten Kappe und/oder des abnehmbaren dichten Deckels, wobei es selbstverständlich ist, dass, wenn kein Halteteil in Stufe e) eingefügt wird, diese vor Stufe d) durchgeführt werden kann.

18. Verfahren nach Anspruch 17, **dadurch gekennzeichnet, dass** es die Stufen umfasst, die darin bestehen, nacheinander
- in die Bohrung, die in der inneren Glasscheibe angebracht worden ist, und
- anschließend in diejenige, die in der Kunststoffschicht angebracht worden ist, ein Führungselement oder ein Halteteil einzufügen, das es ermöglicht, eine vollkommene Zentrierung der Bestandteile des Aufbaus zu erhalten.

19. Detektor, der zur Herstellung einer Verbundglasscheibe nach einem der Ansprüche 1 bis 13 verwendet werden kann, **dadurch gekennzeichnet, dass** er auf einer Seite eine Kopplungsflüssigkeit umfasst, die zuvor eingebracht worden und von einer dichten Abdeckung geschützt ist, die vorgesehen ist, vor Einbau des Detektors in die Verbundglasscheibe abgezogen zu werden.
